# EUROPÄISCHE PATENTANMELDUNG

(11) **EP 1 118 812 A2**
(43) Veröffentlichungstag der Anmeldung: **25.07.2001**
(21) Anmeldenummer: 00124970.5
(22) Anmeldetag: 16.11.2000
(51) Int. Cl.: F16L 55/033, B60R 13/08

(54) **Verkleidungselement**

(30) Priorität: 19.01.2000 DE 10001932
(71) Anmelder: Kautex Textron GmbH & Co. KG., 53229 Bonn (DE)
(72) Erfinder: Moitzheim, Jürgen, 53639 Königswinter (DE); Bantel, Jörg, 51491 Overath (DE)
(74) Vertreter: Kierdorf, Theodor, Dipl.-Ing.

(57) **Zusammenfassung**

Die Erfindung betrifft ein neuartiges Verkleidungselement mit schallabsorbierenden Eigenschaften zur Abschirmung des Motors und/oder der Abgasanlage eines KFZ, beispielsweise als Unterbodenabdeckplatte für ein KFZ, als etwa plattenförmiges, selbsttragend steifes Bauteil aus thermoplastischem Kunststoff, das wenigstens teilweise als Hohlkörper ausgebildet ist, der wenigstens teilweise eine schallabsorbierende Füllung aus geschäumtem, thermoplastischem Kunststoff aufnimmt.

## Beschreibung

Bei modernen KFZ wird zunehmend angestrebt, den von Motoren und/oder Abgasanlagen emittierten Schall durch Verkleidung der entsprechenden Bauteile, insbesondere durch Motorraumauskleidung mit schallabsorbierenden Materialien zu verringern. Beispielsweise sind Isolationselemente aus geschlossenzelligem Schaumstoff oder Vlies für diese Zwecke bekannt geworden. Aus der DE 198 48 679 A1 ist ein Isolationselement bekannt, welches sich durch einen Schichtaufbau aus Vlies und einer Umhüllung aus Folienlagen auszeichnet. Ein ähnliches Isolationselement ist aus der DE 198 48 677 A1 bekannt. Diese Vliese bestehen aus einem relativ komplizierten Verbund von dreidimensionalen und zweidimensionalen textilen Flächengebilden sowie Folien und/oder Schaumstoffen.

Weiterhin sind schallabsorbierende Platten mit sogenannten Hohlraum-Resonatoren bekannt, beispielsweise aus der DE 25 15 127 C2. Dort ist eine schallabsorbierende Platte mit Gruppen benachbarter Hohlraum-Resonatoren mit konstantem Querschnitt und unterschiedlichen Längen beschrieben, deren nebeneinander liegende akustisch offene Enden Schalleintrittsöffnungen der Hohlraum-Resonatoren bilden. Solche Hohlraum-Resonatoren sind in der Regel als Elemente mit verhältnismäßig komplexem inneren Aufbau zur möglichst effektiven Schallabsorption ausgebildet. Die Herstellung solcher Schallabsorber aus röhrenartigen Elementen ist dementsprechend aufwendig.

Aus der DE 197 30 922 A1 ist ein solcher Schallabsorber beschrieben, der röhrenartige Elemente mit sich kreuzenden oder windschief zueinander verlaufenden Längsachsen aufweist Dieser kann als Motorsockelelement, Drahtgehäuse, Endteil einer Abgasleitung oder als Teil einer Motorluftansaugung ausgebildet sein. Schließlich ist auch vorgesehen, daß dieser Schallabsorber an einer Unterseite einer Motorhaube angeordnet ist. Ähnlich wie der zuvor beschriebene, mit Hohlraum-Resonatoren ausgestattete Schallabsorber ist es auch für die Funktionsweise dieses Schallabsorbers wesentlich, daß dieser schalldurchlässig und luftdurchlässig ist. So wird hierzu beispielsweise vorgeschlagen, eine lose Schüttung von röhrenförmigen Elementen in einem Halterungssack vorzusehen, der aus einem schalldurchlässigen und/oder luftdurchlässigen Gewebe oder Gewirke besteht. Die Herstellung eines solchen Schallabsorbers scheint ebenfalls verhältnismäßig aufwendig zu sein.

Der Erfindung liegt daher die Aufgabe zugrunde, ein Verkleidungselement zur Abschirmung des Motors und/oder der Abgasanlage eines KFZ zu schaffen, welches verhältnismäßig einfach und kostengünstig herstellbar ist und verhältnismäßig einfach in einem KFZ verbaubar ist.

Die Aufgabe wird gelöst durch ein Verkleidungselement mit schallabsorbierenden Eigenschaften zur Abschirmung des Motors und/oder der Abgasanlage eines KFZ, als etwa plattenförmiges, selbsttragend steifes Bauteil aus thermoplastischem Kunststoff, das wenigstens teilweise als Hohlkörper ausgebildet ist, der wenigstens teilweise eine schallabsorbierende Füllung aus geschäumtem thermoplastischem Kunststoff aufnimmt.

Ein solches Verkleidungselement läßt sich verhältnismäßig einfach herstellen, beispielsweise aus Polypropylen oder glasfaserverstärktem Polypropylen, welches Material auch verhältnismäßig hitzebeständig ist, so daß das Verkleidungselement gegebenenfalls auch als Hitzeschild einsetzbar ist.

Das Verkleidungselement gemäß der Erfindung kann beispielsweise durch Extrusionsblasformen hergestellt worden sein; die Füllung aus geschäumtem thermoplastischem Material kann dabei sowohl während des Blasvorgangs als auch nachträglich in den Hohlkörper eingebracht worden sein.

Gemäß einer besonders bevorzugten Ausführungsform des Verkleidungselements ist vorgesehen, daß der Hohlraum geschäumten thermoplastischen Kunststoff in Form von Kunststoff-Beads aufnimmt, die unter Druck mit einhergehender anschließender Volumenvergrößerung in den Hohlraum eingebracht wurden. Bei einem solchen Verfahren wird zunächst in üblicherweise Weise im Blasverfahren die äußere Gestalt des Verkleidungselements hergestellt, wobei nach dem Aufweitvorgang, gegebenenfalls bereits in der letzten Phase desselben beginnend, eine Vielzahl von Kunststoff-Beads aus Schaumstoff in den noch in der Blasform befindlichen Hohlkörper eingeblasen wird. Der Beginn dieses Einblasens hängt im wesentlichen von den Druckverhältnissen im Hohlkörper ab. Im allgemeinen wird es zweckmäßig sein, zunächst den Blasdruck, der innerhalb des aus dem Vorforming aufgeweiteten Hohlkörpers herrscht und z.B. 10 bis 12 bar betragen kann, abzusenken, so daß dann die Kunststoff-Beads mit verhältnismäßig geringem Arbeitsdruck, beispielsweise 2 bis 4 bar, in den Innenraum des Hohlkörpers eingeblasen werden.

Diese kleinen Kunststoff-Beads, die vorzugsweise aus geschlossenzelligem Kunststoff bestehen, sind vorher unter Überdruck gesetzt worden, so daß sie eine merkliche Volumenverringerung erfahren haben. Der in der Blasform befindliche Hohlkörper wird möglichst vollständig mit diesen Kunststoff-Beads gefüllt, so daß nach vollständiger Druckentlastung des von dem Hohlkörper umschlossenen Innenraums die Kunststoff-Beads eine Entspannung und damit eine entsprechende Ausdehnung und Volumenvergrößerung erfahren, die im allgemeinen dazu führt, daß auch noch unausgefüllte Bereiche in dem vom Hohlkörper umschlossenen Innenraum von dem Schaumstoff der Kunststoff-Beads ausgefüllt werden. Die Volumenvergrößerung der Kunststoff-Beads kann dazu führen, daß der Hohlkörper auf Dauer unter einem gewissen inneren Überdruck steht. Dies stellt jedoch kein Problem dar. Vielmehr hat sich gezeigt, daß es auf die vorgeschriebene Weise möglich ist, zu einer geschlossenen uniformen Schaumstoff-Füllung innerhalb des Hohlkörpers zu kommen, ohne daß es notwendig wäre, die Kunststoff-Beads untereinander mittels Schweißen oder sonstwie zu verbinden. Es ist allerdings möglich, daß die an der Wandung des Hohlkörpers anliegenden Kunststoff-Beads mit diesem Verschweißen, insbesondere wenn für die Kunststoff-Beads und das äußere Material des Verkleidungselements gleiche oder kompatible Kunststoffe verwendet werden. Hier bietet es sich beispielsweise an, die Kunststoff-Beads aus Polypropylen herzustellen. So gefüllte Hohlräume besitzen ausgezeichnete Schalldämmungseigenschaften.

Zweckmäßigerweise ist der Hohlraum in mehrere kassettenförmige ausgebildete Teilvolumina unterteilt, so daß es möglich ist, durch entsprechende Formgebung dem Verkleidungselement die gewünschte Eigensteifigkeit zu verleihen.

Um die Herstellung durch Extrusions-Blasformen zur erleichtern, auch um das Bauteil möglichst gleichmäßig aufblasen bzw. aufweisen zu können und möglichst wenige Aufblaslöcher vorsehen zu müssen, ist vorgesehen, daß die Teilvolumina des Hohlraums über Kanäle miteinander kommunizieren.

Zweckmäßigerweise müssen wenigstens einige der kassettenförmig ausgebildeten Hohlräume von kleinvolumig ausgebildeten Aussteifungshohlräumen gesäumt, deren Tiefe geringer ist, als diejenige der kassettenförmig ausgebildeten Hohlräume. Diese Aussteifungshohlräume können ebenfalls mit geschäumtem thermoplastischem Kunststoff ausgefüllt sein.

Vorzugsweise sind Versteifungsrippen vorgesehen, die durch Verschweißungen der Wandungen des Bauteils zwischen den Aussteifungshohlräumen gebildet wurden.

Weiterhin kann ein umlaufender Saumbereich vorgesehen sein, in welchem die Wandungen des Verkleidungselements flächig miteinander verschweißt sind. Hierdurch wird eine Schweißnahtbildung beim Blasverfahren im herkömmlichen Sinne entbehrlich. Für die beiden Formhälften des Werkzeugs müssen demzufolge bei einem Vergleich zu dem klassischen Extrusions-Blasformverfahren von Hohlkörpern geringere Schließkräfte aufgebracht werden, da lediglich die Ränder des Bauteils abgequetscht werden müssen.

Die durch die Geometrie des Verkleidungselements erzielte Eigensteifigkeit ermöglicht es, das Verkleidungselement als Unterbodenabdeckplatte für ein KFZ auszubilden. Eine solche Unterbodenabdeckplatte gewährleistet nicht nur ausgezeichneten Schallschutz, sondern auch der CW-Wert eines mit einer solchen Unterbodenabdeckplatte ausgestatteten KFZ wird deutlich verbessert, da Luftverwirbelungen in dem zur Straße offenen Motorraum oder an exponierten Bauteilen der Unterbodengruppe des Fahrzeugs vermieden werden. Solche Luftverwirbelungen sind ebenfalls Geräuschquellen, die einhergehend mit der CW-Wert-Verbesserung ausgeschaltet werden.

Ein solches Verkleidungselement besitzt wenigstens einseitig, nämlich an der dem Fahrzeug zuzukehrenden Seite, eine durch die Hohlraumaufteilung gegebene Topographie, die dem Unterbodenprofil des KFZ etwa entspricht. Weiterhin kann in dem Verkleidungselement wenigstens ein dieses durchsetzender Luftkanal vorgesehen sein, beispielsweise zur Anströmung eines Ölkühlers oder dergleichen.

Die Erfindung wird nachstehend anhand eines in den Zeichnungen dargestellten Ausführungsbeispiels erläutert werden.

Es zeigen:
- Fig. 1: eine Draufsicht auf ein als Unterbodenabdeckplatte für ein KFZ ausgebildetes Verkleidungselement gemäß der Erfindung von der dem Unterboden des KFZ zugewandten Seite,
- Fig. 2: einen Schnitt entlang der Linien II-II in Figur 1 und

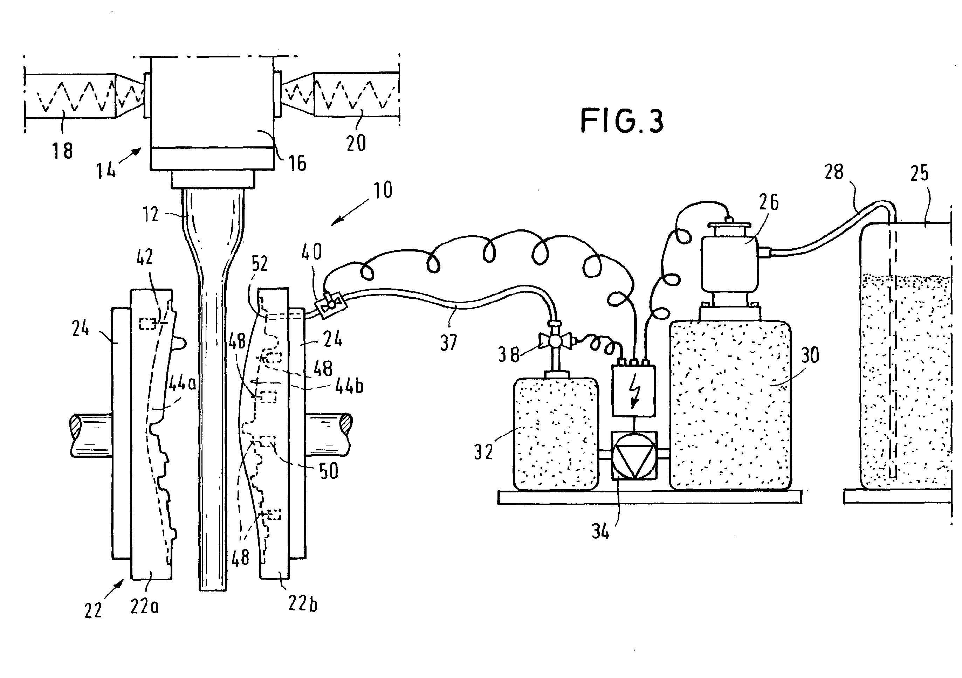

- Fig. 3: eine Einrichtung zum Herstellen von mit Schaumstoff ausgefüllten Verkleidungselementen mit geöffneter Blasform.

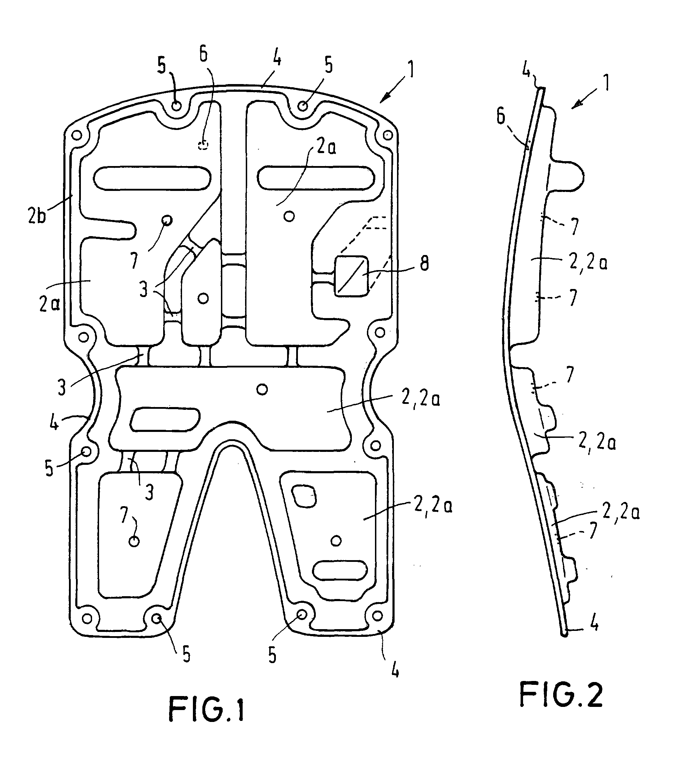

Das in der Figur 1 dargestellte Verkleidungselement 1 ist als Unterbodenabdeckplatte für ein KFZ zur Abschirmung des Motors und wenigstens Teilen der Abgasanlage gegen Geräuschemissionen ausgebildet. Das Verkleidungselement 1 gemäß dem dargestellten und beschriebenen Ausführungsbeispiel dient gleichzeitig der CW-Wert-Verbesserung eines KFZ, obwohl die Erfindung so zu verstehen ist, daß ein solches Verkleidungselement auch an anderen Stellen des KFZ, beispielsweise zwischen Motorraum und Fahrgastzelle oder an der Unterseite einer Motorhaube vorgesehen sein kann. Die nachstehend beschriebene Geometrie des Verkleidungselementes 1 ist nur beispielsweise und kann je nach Verwendungszweck beliebig ausgestaltet sein.

Das Verkleidungselement 1 ist als etwa plattenförmiges, selbsttragend steifes Bauteil aus thermoplastischem Kunststoff, vorzugsweise aus glasfaserverstärktem Polypropylen, mit einer Glasfaserbeimischung von zwischen 5 und 15 % ausgebildet. Unter selbsttragend steif im Sinne der Erfindung ist zu verstehen, daß dieses Bauelement die nötige Eigensteifigkeit aufweist, um ohne zusätzliche Unterstützung oder Stabilisierung beispielsweise freitragend am Unterboden eines KFZ montiert zu werden.

Wie aus den Figuren 1 und 2 in Kombination ohne weiteres ersichtlich ist, ist das Verkleidungselement 1 als doppelwandiges Bauteil mit mehreren miteinander über Kanäle 3 kommunizierenden Hohlräumen 2 ausgebildet. Die Hohlräume 2 bilden verschiedene Teilvolumina des als Hohlkörper ausgebildeten Verkleidungselementes 1, wobei kassettenförmig ausgebildete Hohlräume 2a im wesentlichen die den Unterboden des KFZ zugewandten Topographie des Verkleidungselements 1 bestimmen. Auf der dem Unterboden des KFZ abgewandten Seite ist das Verkleidungselement in dem dargestellten Ausführungsbeispiel glattwandig ausgebildet.

Die kassettenförmig ausgebildeten Hohlräume 2 sind ausnahmslos mit einem geschlossenzelligen Schaumstoff in Form von sogenannten Mini-Beads aus Polypropylen mit einer verhältnismäßig geringen Dichte gefüllt. Die Dichte des Schaumstoffs ist entsprechend der gewünschten Schalldämmungseigenschaften des Verkleidungselements 1 gewählt, diese kann beispielsweise zwischen 20 und 30 Gramm pro Liter betragen.

Die kassettenartig ausgebildeten Hohlräume 2a werden von kleinvolumigeren Aussteifungshohlräumen 2b gesäumt, die beispielsweise eine Hohlraumhöhe von 1 bis 3 mm bei einer Wandstärke der Wandungen des Verkleidungselements 1 von etwa 1 mm aufweisen können. Auch die Aussteifungshohlräume 2b können je nach Einbringdruck mehr oder minder mit thermoplastischem Schaumstoff in Form von Mini-Beads gefüllt sein, was aber nicht zwingend erforderlich ist. Um eine lückenlose Füllung der kassettenartig ausgebildeten Hohlräume 2a mit Mini-Beads zu gewährleisten, kommunizieren diese über die Kanäle 3 miteinander, deren Hohlraumhöhe deutlich mehr als 3 mm beträgt, gegebenenfalls der Höhe der kassettenartig ausgebildeten Hohlräume 2a entsprechen kann. Die Hohlraumhöhe der kassettenartig ausgebildeten Hohlräume kann zwischen 30 und etwa 100 mm variieren, je nach Profil des KFZ-Unterbodens.

Stellenweise können die Wandungen des Verkleidungselements vollständig miteinander verschweißt sein, beispielsweise im Bereich eine umlaufenden Saums 4 bzw. Preßrands, welcher eine Breite von etwa 3 bis 10 mm aufweisen kann. Eine solche Verschweißung ist ebenfalls im Bereich der mit 5 bezeichneten Befestigungslöcher des Verbindungselements 1 vorgesehen. Die Befestigungslöcher 5 dienen der Montage des Verkleidungselements 1 an der Unterbodengruppe des KFZ.

Mit 6 ist ein Aufblasloch bezeichnet, durch welches während des Blasformens mit wenigstens einer Nadel mit einem Durchmesser von ca. 2 bis 8 mm eine Aufweitung und das Aufblasen des Vorformlings bei der Herstellung des Verkleidungselements erfolgt, wie nachstehend beschrieben wird.

Mit 7 sind jeweils an den kassettenförmig ausgebildeten Hohlräumen 2a vorgesehene Füllöcher zur Einbringung der Mini-Beads bezeichnet.

Schließlich ist wenigstens ein Luftkanal 8 vorgesehen, der das Verbindungselement 1 vollständig durchsetzt und der beispielsweise der Anströmung eines Kühlers oder Ölkühlers dienen kann.

Der Vollständigkeit halber sei noch erwähnt, daß die Wandung des Verkleidungselements 1 im Bereich der Befestigungslöcher 5 und im Bereich des Saums miteinander verpreßt und verschweißt sind, Verschweißungen können jedoch zu Verstärkungszwecken an beliebiger Stelle des Verkleidungselements vorgesehen sein.

In Figur 1 ist schematisch eine Extrusions-Blaseinrichtung 10 dargestellt, anhand derer das Verfahren zur Herstellung des Verkleidungselementes 1 gemäß der Erfindung nachstehend erläutert wird.

Die in der Zeichnung dargestellte Extrusions-Blaseinrichtung 10 ist mit einer Extrusionseinrichtung 14 versehen, die zur Herstellung von schlauchförmigen Vorformlingen 12 dient. Von der Extrusionseinrichtung sind in der Zeichnung lediglich der Extrusionskopf 16 und - stark verkleinert - zwei Extruder 18 und 20 dargestellt. Die Verwendung von zwei Extrudern ermöglicht es, einen Vorformling 12 herzustellen, dessen Wandung laminatartig aus zwei Schichten besteht. Es ist für den Fachmann selbstverständlich, daß auch mehr als zwei Schichten vorgesehen sein können, je nach Ausbildung der Extrusionseinrichtung 14.

Die Blasform 22 ist zweiteilig ausgebildet und bei dem dargestellten Ausführungsbeispiel so unterhalb des Extrusionskopfes 16 angeordnet, daß sie den aus letzterem extrudierten Vorformling 12, der frei am Extrusionskopf 16 hängt, aufnehmen kann. Die Blasform 22 besteht aus zwei Formteilen 22a, 22b, die in der Zeichnung in einer offenen Position dargestellt sind und in der Bildebene in eine nicht dargestellte geschlossene Position zustellbar sind.

In einem Abstand von der Blasform 22, deren Teile 22a, 22b jeweils von einer Halteplatte 24 getragen sind, ist ein Vorratsbehälter 25 für Kunststoff-Beads angeordnet, aus welchem mittels einer üblichen Fördereinrichtung 26 über eine Rohrleitung 28 die Kunststoff-Beads in einen daneben befindlichen Zwischenbehälter 30 gefördert werden, der, wie der Vorratsbehälter 25, unter Normaldruck steht.

Ein Druckbehälter 32 ist über eine Pumpe 34 mit einem Zwischenbehälter 30 verbunden. Die Pumpe fördert die Kunststoff-Beads aus dem Zwischenbehälter 30 in den Druckbehälter 32, wobei sie gleichzeitig in letzterem einen Überdruck aufbaut, der beispielsweise 2 bar betragen kann und in jedem Fall größer sein muß als der Druck, der im Inneren der Blasform bzw. in dem in letzterem befindlichen Hohlkörper herrscht, der innerhalb der Blasform durch Aufweiten des Vorformlings 12 entsteht. An den Druckbehälter 32 ist eine Rohr- oder Schlauchleitung 37 angeschlossen, die mit zwei Ventilen 38, 40 versehen ist. Die Schlauchleitung 37 endet innerhalb des Blasformteils 22b und ist an diesem Ende 52 so ausgebildet, daß der Innenraum des aus dem Vorformling 12 herzustellenden Hohlkörpers mit der Leitung 37 und mit dem Druckbehälter 32 verbunden werden kann.

Wie bereits vorstehend erwähnt, wird der Hohlkörper bei etwa plattenförmiger Gestalt desselben in üblicher Weise so hergestellt, daß zunächst ein Schlauch als Vorformling 12 extrudiert wird, in den von unten zwei nicht dargestellte Dorne eingefahren werden, die etwa parallel zur Teilungsebene der Blasform 22 voneinander bewegt werden und dabei den Schlauch spreizen, um diesen in eine flache Gestalt zu bringen, wobei ebenfalls in üblicher Art und Weise bereits durch den Extrusionskopf 16 Stützluft in den Vorformling 12 eingeführt wird. Danach wird die Blasform 22 geschlossen, wobei entlang des gesamten oder nahezu gesamten Umfangs des gespreizten Vorformlings 12 Überschußmaterial abgequetscht wird. Die beiden Spreizdorne befinden sich dabei außerhalb der Kontur des Formnestes und damit der letzteres begrenzenden Abquetschkanten.

Nach dem Schließen der Blasform durch Bewegen der Formteile 22a, 22b in die geschlossene Stellung wird der Vorformling 12 durch Einführen von Blasluft durch einen Blasdorn 42 in den Vorformling hinein aufgeweitet, wobei die Gestalt des dabei entstehenden Hohlkörpers durch die Kontur des Formnest bestimmt wird, welches sich aus den beiden Formnestabschnitten 44a, 44b in den Formteilen 22a bzw. 22b zusammensetzt. Das Einführen von Blasluft 42 kann unter Umständen bereits während des Schließens der Blasform 22 geschehen. Dabei handelt es sich jedoch um Vorgänge, die jedem Fachmann auf dem Gebiet der Blasformtechnik geläufig sind. Entsprechendes gilt auch für die Extrusionstechnik zur Herstellung des Vorformlings 12. Es sei an dieser Stelle angemerkt, daß das beschriebene Verfahren zur Herstellung eines Hohlkörpers in Form eines Stoßfängers für Kraftfahrzeuge bereits in der DE 199 30 903 beschrieben ist, auf welche Anmeldung hier zum Zwecke der Offenbarung voll inhaltlich Bezug genommen wird.

Die Formhälfte 22b ist entlang der vertikalen Erstreckung des Formnestes 44a, 44b und somit entlang dem sich darin befindlichen Hohlkörper mit Hohlnadeln 48 versehen, die über die Begrenzung des Formnestes 44b in dieses hineinragen, so daß spätestens beim Aufweiten des Vorformlings dessen Wandung im Bereich der kassettenartig ausgebildeten Hohlräume 2a (Figur 1) von den Hohlnadeln 48 durchstochen wird. Jede der Hohlnadlen 48 ist unter Zwischenschaltung eines Ventils 50 mit einer nicht dargestellten Unterdruckquelle verbunden.

Im einzelnen wird so vorgegangen, daß nach dem Schließen der Blasform der Vorformling 12 seine Aufweitung zum Hohlkörper erfährt. Sobald der Aufbereitungsvorgang abgeschlossen ist oder kurz danach wird der Druck im Innenraum des Hohlkörpers, der während des Aufweitvorgangs beispielsweise 10 bar betragen kann, reduziert. Dies kann über die Blasdüse 42 oder eine daran vorgesehene Entlüftungsöffnung, gegebenenfalls aber auch über die Hohlnadeln 48 erfolgen, deren Ventile 50 während des Aufweitvorgangs geschlossen sind. Das Ausmaß, um welches der Innendruck im Hohlkörper abgesenkt wird, hängt im wesentlichen ab von dem Druck, mit welchen die Kunststoff-Beads aus dem Druckbehälter 32 in den Innenraum transportiert werden. In jedem Fall muß der Druck im Druckbehälter 32 größer sein, wobei mit zunehmendem Druckunterschied zwischen dem Druck im Druckbehälter 32 und dem im Innenraum des Hohlkörpers sich auch die Geschwindigkeit erhöht, mit welcher die Kunststoff-Beads in den Innenraum transportiert werden. Der Druck im Innenraum des Hohlkörpers und damit in der Blasform 22 muß hoch genug sein, um zu erreichen, daß die Kunststoff-Beads eine gewisse Komprimierung unter Verringerung des Volumens erfahren, welches sie bei Normaldruck aufweisen. Nach dem vorstehend beschriebenen Verfahren werden die kassettenartig ausgebildeten Hohlräume 2a des Verkleidungselements gleichzeitig oder in einer bestimmten Reihenfolge mit den Kunststoff-Beads ausgefüllt, gegebenenfalls, das hängt auch von dem Druck im Druckbehälter 32 ab, können die Aussteifungshohlräume 2b ebenfalls mit Kunststoff-Beads ausgefüllt werden.

Bis zum Ende des Füllvorgangs wird ein Überdruck innerhalb des Hohlkörpers aufrechterhalten, der ausreicht, die Kunststoff-Beads in einem komprimierten Zustand zu halten, so daß nach Beendigung des Füllvorgangs zwischen dem Innenraum des Hohlkörpers und der äußeren Umgebung die Kunststoff-Beads innerhalb kurzer Zeit expandieren.

Das vorstehend beschriebene Verfahren ist für sich genommen nicht Gegenstand der Erfindung, gleichwohl sei an dieser Stelle noch darauf hingewiesen, daß die innerhalb des Hohlkörpers befindliche Füllung durch die Volumenzunahme der einzelnen Kunststoff-Beads nach Herbeiführung des vollständigen Druckausgleichs eine Verfestigung erfährt, die zu einem einheitlichen Schaumgefüge führt, dessen einzelne Partikel jedoch durchweg nicht miteinander verbunden sind.

### Bezugszeichenliste

- 1: Verkleidungselement
- 2: Hohlräume
- 2a: kassettenartig ausgebildete Hohlräume
- 2b: Aussteifungshohlräume
- 3: Kanäle
- 4: Saum
- 5: Befestigungslöcher
- 6: Aufblasloch
- 7: Füllöcher
- 8: Luftkanal
- 10: Extrusionsblaseinrichtung
- 12: Vorformling
- 14: Extrusionseinrichtung
- 16: Extrusionskopf
- 18, 20: Extruder
- 22: Blasform
- 22a, b: Formteile
- 24: Halteplatte
- 25: Vorratsbehälter
- 26: Fördereinrichtung
- 28: Rohrleitung
- 30: Zwischenbehälter
- 32: Druckbehälter
- 34: Pumpe
- 37: Schlauchleitung
- 42: Blasdorn
- 44a, b: Formnestabschnitte
- 48: Hohlraum
- 50: Ventil
- 52: Ende der Schlauchleitung

## Patentansprüche

1. Verkleidungselement (1) mit schallabsorbierenden Eigenschaften, zur Abschirmung des Motors und/oder der Abgasanlage eines KFZ, als etwa plattenförmiges, selbsttragend steifes Bauteil aus thermoplastischem Kunststoff, das wenigstens teilweise als Hohlkörper ausgebildet ist, der wenigstens teilweise eine schallabsorbierende Füllung aus geschäumtem thermoplastischem Kunststoff aufnimmt.

2. Verkleidungselement nach Anspruch 1, **dadurch gekennzeichnet**, daß es durch Extrusions-Blasformen erhalten wurde.

3. Verkleidungselement nach Anspruch 1 oder 2, **dadurch gekennzeichnet,** daß der Hohlraum geschäumten thermoplastischem Kunststoff in Form von Kunststoff-Beads aufnimmt, die unter Druck mit einhergehender anschließender Volumenvergrößerung in den Hohlraum eingebracht wurden.

4. Verkleidungselement nach einem der Ansprüche 1 bis 3, **dadurch gekennzeichnet**, daß der Hohlraum in mehrere kassettenförmig ausgebildete Teilvolumina unterteilt ist.

5. Verkleidungselement nach Anspruch 4, **dadurch gekennzeichnet**, daß die Teilvolumina des Hohlraums über Kanäle (3) miteinander kommunizieren.

6. Verkleidungselement nach einem der Ansprüche 4 oder 5, **dadurch gekennzeichnet,** daß wenigstens einige der kassettenförmig ausgebildeten Hohlräume (2a) von kleinvolumig ausgebildeten Aussteifungshohlräumen (2b) gesäumt sind, deren Tiefe geringer ist als diejenige der kassettenförmig ausgebildeten Hohlräume 2a.

7. Verkleidungselement nach einem der Ansprüche 1 bis 6, **dadurch gekennzeichnet**, daß Versteifungsrippen vorgesehen sind, die durch Verschweißung der Wandungen des Bauteils zwischen den Aussteifungshohlräumen (2b) gebildet werden.

8. Verkleidungselement nach einem der Ansprüche 1 bis 7, **gekennzeichnet durch** einen umlaufenden Saumbereich, in welchem die Wandungen des Verkleidungselements (1) flächig miteinander verpreßt oder verschweißt sind.

9. Verkleidungselement nach einem der Ansprüche 1 bis 8, **dadurch gekennzeichnet**, daß es als Unterbodenabdeckplatte für ein KFZ ausgebildet ist.

10. Verkleidungselement nach Anspruch 9, **dadurch gekennzeichnet**, daß wenigstens einseitig eine durch die Hohlraumaufteilung gegebene Topographie vorgesehen ist, die dem Unterbodenprofil des KFZ etwa entspricht.

11. Verkleidungselement nach einem der Ansprüche 1 bis 10, **dadurch gekennzeichnet,** daß wenigstens ein das Verkleidungselement (1) durchsetzender Luftkanal (8) vorgesehen ist.
